**Europäisches Patentamt**

**European Patent Office**

**Office européen des brevets**

(19)

(11) Numéro de publication: **0 095 415**
**B1**

(12) ## FASCICULE DE BREVET EUROPEEN

(45) Date de publication du fascicule du brevet:
05.02.86

(51) Int. Cl.⁴: **B 62 D 5/083,** F 15 B 13/04,
F 16 K 3/00

(21) Numéro de dépôt: **83401004.3**

(22) Date de dépôt: **20.05.83**

(54) **Distributeur rotatif hydraulique à rotor en étoile, plus particulièrement pour mécanisme de direction assistée.**

(30) Priorité: **26.05.82 FR 8209134**

(43) Date de publication de la demande:
**30.11.83 Bulletin 83/48**

(45) Mention de la délivrance du brevet:
**05.02.86 Bulletin 86/6**

(84) Etats contractants désignés:
**DE GB IT**

(56) Documents cités:
**EP - A - 0 004 212**
**EP - A - 0 008 252**
**FR - A - 2 486 896**
**FR - A - 2 486 897**

(73) Titulaire: **BENDIBERICA S.A., Balmès 243,**
**Barcelona 6 (ES)**

(72) Inventeur: **Bacardit, Juan Simon, Calle Mallorca 451,**
**Barcelona 13 (ES)**

(74) Mandataire: **Le Moenner, Gabriel et al, SERVICE**
**BREVETS BENDIX 44, Rue François 1er, F-75008 Paris**
**(FR)**

LIBER, STOCKHOLM 1986

## Description

La présente invention concerne les distributeurs hydrauliques rotatifs pour systèmes d'actionnement hydrauliques, plus particulièrement pour mécanismes de direction assistée de véhicules automobiles, du type comportant, dans un carter, un premier organe tournant en forme de disque solidaire en rotation d'un arbre d'entrée et monté à rotation dans une cavité discoïdale d'un second organe tournant solidaire en rotation d'un arbre desortie, les deux organes coopérant mutuellement pour sélectivement former des trajets de fluide entre une source de fluide de pression et les compartiments respectifs d'un moteur d'assistance en fonction de la position angulaire relative de ces deux organes, le premier organe délimitant, dans la cavité discoïdale, au moins deux chambres internes et deux chambres externes décalées angulairement susceptibles de communiquer sélectivement avec des lumières de distribution communiquant respectivement avec les compartiments et formées dans les parois axiales en regard de la cavité au droit de portions de voile du premier organe séparant une chambre interne d'une chambre externe adjacente, les chambres externes communiquant en permanence avec un passage d'amenée de fluide sous pression, et aumoins un passage de retour de fluide communiquant en permanence avec les chambres internes.

Un distributeur hydraulique de ce type est représenté sur les Figures 8 et9 du document FR-A-2486897, où le premier organe tournant, ou rotor, comporte deux chambres internes communiquant sélectivement avec des lumières de distribution de petites dimensions radiales et en permanence avec un passage de retour annulaire central du second organe tournant. Les restrictions modulables résultant de la coopération entre les parties de voile du premier organe et les lumières de distribution sont donc en nombre réduit et présentent de plus une faible extension radiale, et n'autorisent de ce fait le passage que de débits instantanés relativement faibles et avec une progressivité de modulation non garantie, tant à l'ouverture qu'à la fermeture, ce qui se traduit par une sensibilité et une précision d'utilisation médiocres. D'autre part, dans ce type de distributeur, la périphérie du premier organe est soumise en permanence à la haute pression provenant de la source, de sorte que le le bord externe des chambres internes (qui sont, elles, à la pression de la bâche) est soumis à des efforts importants susceptibles d'y induire des distorsions et, partant, un disfonctionnement du distributeur.

La présente invention a pour objet de proposer un distributeur hydraulique du type sus-mentionné, dans un agencement permettant, pour un diamètre réduit du distributeur, une sensibilité et une précision d'utilisation ainsi qu'une fiabilité accrues.

Pour ce faire, selon l'invention, le premier organe est constitué d'un rotor en étoile dont les bras radiaux délimitent entre eux les chambres externes, chaque chambre interne étant formée dans un bras radial respectif et présentant un bord extérieur à profil ayant une convexité dirigée vers l'axe du rotor en étoile, le profil des lumières de distribution coïncidant sensiblement avec celui des portions de voile associées des bras.

La mise en oeuvre d'un rotor en étoile, avec plusieurs bras radiaux et des lumières de distribution à profil coïncidant sensiblement avec celui des portions de voile des bras du rotor, permet de multiplier les restrictions modulables et d'augmenter donc les débits instantanés du passage d'amenée de fluide vers la chambre activée du vérin et de la chambre inactivée vers le passage de retour tout en en conservant le contrôle précis. D'autre part, la forme bombée interieurement du bord externe des chambres internes dans les bras du rotor permet de rigidifier ce bord externe tout en conservant, au niveau des portions de voile radiales, et donc des restrictions modulables, une longueur radiale importante pour offrir ainsi une section de passage de fluide convenable.

Selon une caractéristique additionelle de l'invention, le second organe est constitué d'un assemblage axial d'au moins deux éléments annulaires dont les faces en regard forment les parois axiales de la cavité discoïde, ces éléments annulaires étant assemblés par des organes de fixation s'étendant axialement au travers des chambres externes du rotor en étoile, dans un agencement contribuant à la réalisation d'un distributeur hydraulique de diamètre réduit, susceptible d'être monté dans un alésage du carter, ce dernier conservant un diamètre hors tout réduit.

D'autres caractéristiques et avantages de la présente invention ressortiront de la description suivante d'un mode de réalisation, donné à titre illustratif mais nullement limitatif, faite en relation avec les dessins annexés, sur lesquels:
- la figure 1 est une coupe schématique axiale d'un distributeur hydraulique rotatif selon l'invention incorporé à mécanisme de direction assistée;
- la figure 2 est une vue schématique en coupe transversale suivant la ligne II-II de la figure 1;
- la figure 3 est une vue en plan du rotor de la figure 2;
- la figure 4 est une vue de la face interne d'un des deux éléments annulaires d'extrémité constituant le second organe ou stator du distributeur figures 1 et 2; et
- la figure 5 est une représentation schématique développée du distributeur des figures 1 et 2.

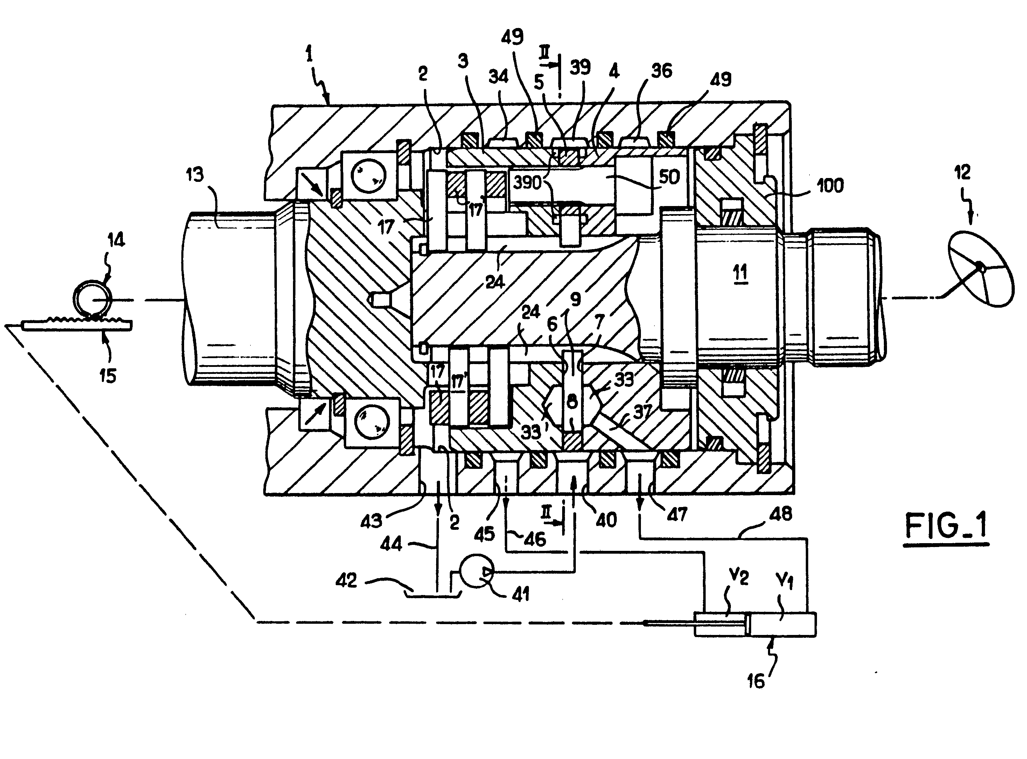

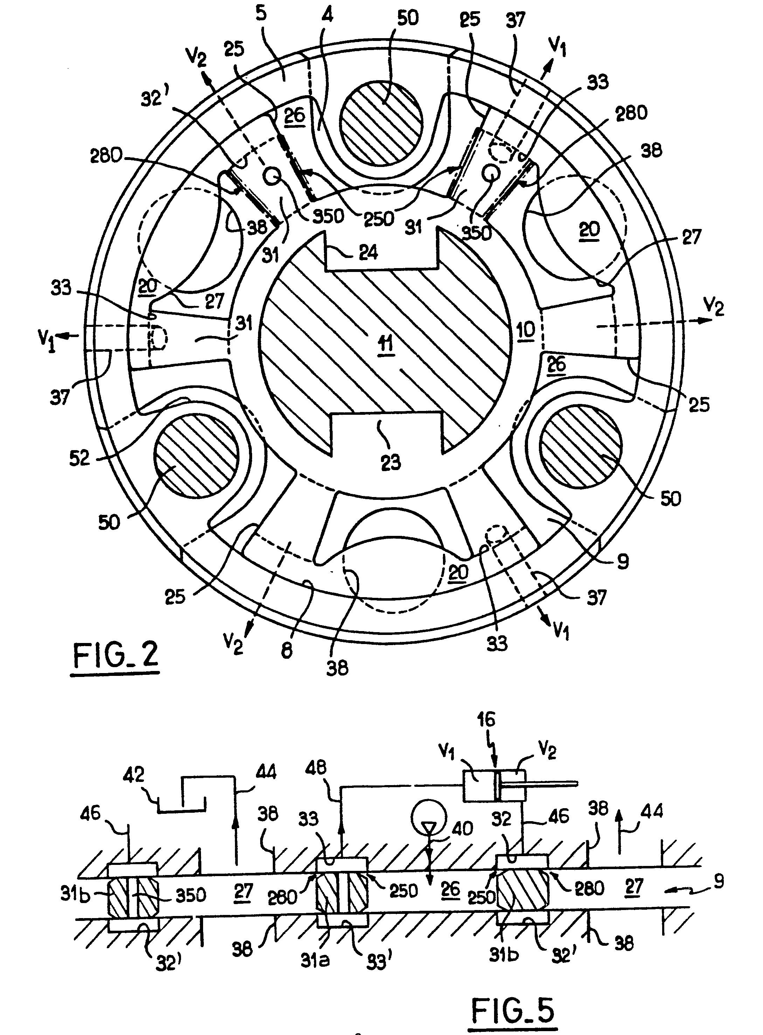

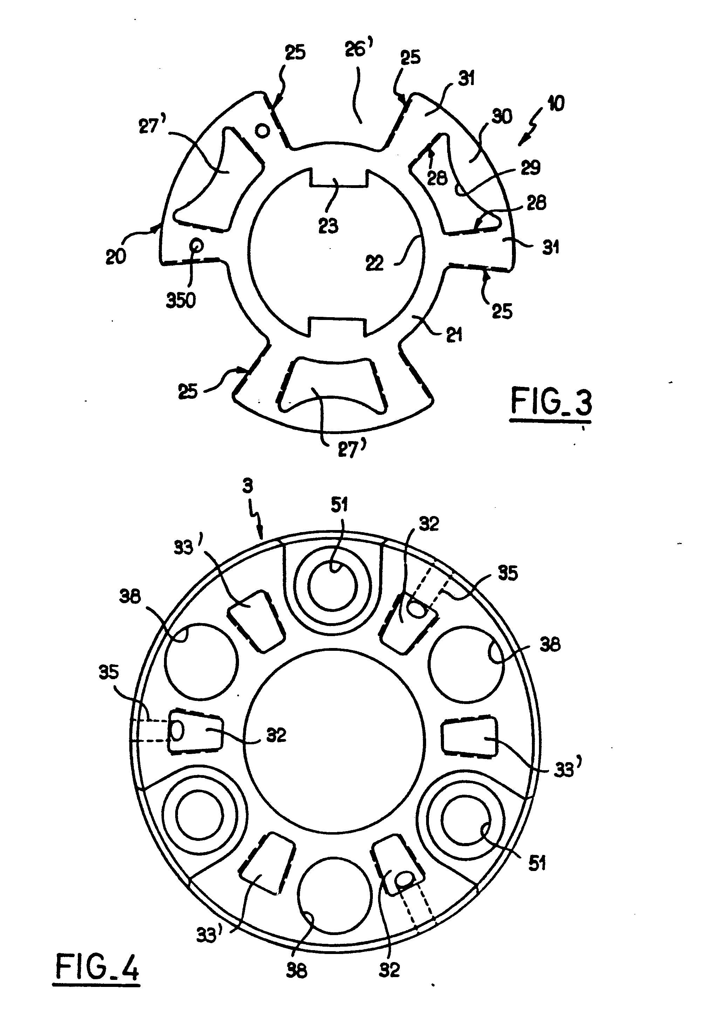

On a représenté sur la figure 1 une extrémité d'un boîtier 1 d'un mécanisme de direction assistée à l'intérieur duquel est défini un alésage axial 2 dans lequel est monté en rotation le stator d'un distributeur hydraulique conforméement à la présente invention. Ce stator est constitué d'un assemblage coaxial d'une première pièce annulaire d'extrémité 3 et d'un seconde pièce annulaire d'extrémité 4 entre lesquelles est bridée une pièce annulaire intermédiaire 5 formant entretoise, les faces axialement en regard 6 et 7 des pièces annulaires d'extrémité 3 et 4, respectivement, et la paroi périphérique interne 8 de l'élément intermédiaire 5 définissant une cavìt sen iblement discoide 9 dans laquelle est monté à coulissement par ses races laterales un rotor 10, visible sur les figures 2 et 3 mais non représenté sur la figure 1.

De façon connue dans la technique, le rotor 10 est rendu solidaire en rotation d'un arbre d'entrée 11,

2

**0 095 415**

typiquement relie, dans l'exemple represente, à un volant de direction 12, le stator 3-5 étant relie à un arbre de sortie 13 actionnant par exemple un pignon 14 engrenant avec une crémaillère 15 d'un mécanisme de direction des roues orientables d'un véhicule, le déplacement de la crémaillère 15 étant assisté par un vérin hydraulique 16 du type à double effet. L'arbre d'entrée 11 et le rotor 10 peuvent tourner librement d'une petite valeur angulaire déter,on451e par rapport à l'équipage du stator 3-5 et de l'arbre de sortie 13, le déplacement angulaire de l'arbre 11 au-delà de cette plage déterminée entraînant également la rotation de l'arbre de sortie 13 et du stator 3-5 qui lui est accouplé. Dans l'exemple représenté sur la figure 1, cet accouplement à course morte et à rappel de centrage est effectué par au moins une paire de ressorts en C 17, 17' suivant un agencement décrit dans la demande de brevet espagnole No. 506 793 déposée le 14 octobre 1981 au nom de la demanderesse. En variante, de façon également connue en soi, l'accouplement élastique à course morte angulaire entre l'arbre d'entrée 11 et l'arbre de sortie 13 peut être effectué par une barre de torsion s'étendant dans un alésage axial formé dans l'arbre d'entrée 11 et ayant ses extrémités reliées respectivement à l'arbre d'entrée 11 et à l'arbre de sortie 13. Comme on le voit mieux sur les figures 2 et 3, conformément à l'invention, le rotor 10 est du type dite en étoile avec trois bras 20 (ou plus) s'étendant radialement vers l'extérieur à partir d'une zone de moyeu annulaire 21 comprenant un orifice central 22 au travers duquel s'étend l'extrémité intérieure de l'arbre 11, la solidarisation en rotation entre le rotor et l'arbre 11 s'effectuant par des dents 23 faisant saillie radialement vers l'intérieur dans l'orifice 22 et reçue dans des ainures correspondantes 24 de l'arbre 11. Les bras 20 du rotor 10 sont délimités latéralement par des premiers bords de fermeture radiaux 25. Deux premiers bords de fermeture adjacents 25 définissent ainsi entre eux un espace 26' qui constituera, le rotor étant monté dans la cavité discoïde 9, une desdites secondes chambres 26 déliminées par les parois axialement en regard 6 et 7 et la paroi périphérique 8 de la cavité discoïde 9. La périphérie des bras 20 est circonscrite par un cercle ayant un diamètre légèrement inférieur à celui de la paroi interne 8 de l'élément annulaire intermédiaire 5 du stator. Dans chaque bras 20 est formée une découpe 27' qui constitue, lorsque le rotor est disposé dans la cavité 9, une chambre 27 d'une première série de chambres délimitées latéralement par les parois en regard 6 et 7 de la cavité 9 ; chaque decoupe 27' est définie latéralement par deux seconds bords de fermeture radiaux 28 et extérieurement par un bord 29 à convexite dirigée radialement vers l'intérieur et permettant ainsi de ménager une zone radiale utile convenable pour les seconds bords de fermeture intérieure 28. Les bords de fermeture 25 et 28 ménagent ainsi de part et d'autre de chaque decoupe 27' une portion de voile pleine 31 de forme sensiblement trapézoïdale. 2, ces portions de voile des bras 20 coïncident sensiblement en recouvrement avec des lumières de profil trapézoïdal identique 32 et 33 réparties angulairement, respectivement dans les faces 6 et 7 des éléments annulaires d'extrémité 3 et 4. Plus précisément, comme on le voit sur la figure 4, la face 6 de l'élément annulaire 3 comporte trois lumières de passage 32 communiquant avec une gorge peripherique 34 formée dans le boîtier 1 par des conduits s'étendant vers l'extérieur 35. De la même façon, la face 7 de l'élément des le boitier 1 par des conduits 37. En pratique, pour des questions d'équilibrage hydraulique axial, les portions de voile 31 des bras 20 du rotor 10 sont pourou 33 d'une face est ménagée, dans la face opposée, une lumière correspondante mais borgne 32' et 33', respectivement. Dans chaque élément annulaire 3 ou borgnes dans la paroi latérale correspondante 6 ou 7 de la cavité 9 et communiquant avec la chambre intérieure du boîtier 1 formée par l'alésage 2. Comme on le voit sur la figure 1 une gorge périphérique annulaire 39 est également formée 5 et communiquant librement aveo la cavité discoïde 9 par des conduits radiaux 390. Cette gorge 39 communique par ailleurs, par un passage 40 formé dans le boîtier 1, avec une souroe de fluide sous pression, en l'occurence une pompe 41 puisant le liquide de travail dans un réservoir 42. L'intérieur de l'alésage 2 communique par un passage 43 formé dans le boîtier 1 avec une ligne de retour 44 au réservoir 42. La gorge 34 communique par un passage 45 forme du vérin 16, tandis que la gorge 36 communique par un passage 47 formé dans le corps de boîtier 1 avec une ligne 48 reliée à l'autre compartiment V1 du unes des autres, sont mutuellement isolées par des joints tels que 49.

Dans la configuration assemblée représentée sur les figures 1 et 2, on voit que les passages axiaux 38 sont dimensionnés pour communiquer en permanence largement avec les premières chambres 27 formées dans les bras 30 du rotor 10. De même, les secondes chambres 26 formées entre deux bras adjacents du rotor communiquent en permanence avec la source de pression 41 par la gorge 39. Cet agencement permet, conformément à un des objets de l'invention, d'assembler les éléments 3-5 constitutifs du stator par des boulons 50 s'étendant axialement au travers des secondes chambres 26 entre deux bras du rotor, 10. Au droit des boulons 50, les éléments annulaires d'extrémité 3 et 4 sont avantageusement pourvus d'un bossage 51, de même que l'élément intermédiaire 5 est pourvu d'une patte radiale 52 reçue dans les premières chambres 26 et pouvant servir de butée angulaire au déplacement du rotor 10.

Le fonctionnement du dispositif est le suivant :

Dans la position neutre ou de repos, représentée sur la figure 2, les différentes lumières 32 et 33 sont sensiblement occultées par les portions de voile 31 du rotor dont les bords sont chanfreinés pour former des restrictions controlées de passage de fluide 250 et 280 entre les secondes chambres d'entrée 26 et les lumières de travail 32 et 33, et de ces dernières vers les premières chambres de sortie 27. Dans la position de repos, le fluide sous pression dans les chambres 26 s'écoule symétriquement via les restrictions d'entrée 250 dans les lumières 32 et 33 et de ces dernières, via les restrictions de sortie 280, dans les premières chambres 27 puis, par les passages 38, en retour vers le réservoir 42 dans un fonctionnement du type dit 'à centre ouvert'. Par contre, dès que le rotor est déplacé adgulairement dans une direction par rapport au stator, il se crée une variation de passage différentielle entre les deuuxrestrictions d'entrée 250 provooqant une auugentala pression de fluide dans l'autre lumière de passage 33 ou 32 amenant ainsi le vérin 16 à se deplacer corrélativement pour assister le

3

système de direction du véhicule, la situation étant exactément inversée lorsque le rotor est actionné en rotation dans la direction opposée, comme cela est bien connu dans la technique.

De préférence, les chanfreins des bords de fermeture 25 et 28 coopérant avec les bords adjacents des lumières de passage 32 et 33, ainsi qu'éventuellement ces bords des lumières de passage, ont un profil évolutif délimitant entre les bords adjacents coopérants des deux organes un passage de fluide ayant, pour chaque position angulaire relative de ces organes, une largeur identique sur toute la longueur radiale du passage, conformément à la demande EP-A- 95965 au nom de la demanderesse, et publiée le 07-12-83.

Quoique la présente invention ait été décrite en relation avec un mode de réalisation particulier, elle ne s'en trouve pas limitée mais est au contraire susceptible de modifications et de variantes qui apparaitront à l'homme de l'art. L'invention pourrait en effet également s'appliportions de voile 31 du rotor recouvrant alors intégralement les lumières 32 et 33 du stator en position de repos. De même, le distributeur hydraulique précédemment décrit peut etre utilisé, avec des modifications de détail appropriées, dans d'autres applications où l'on recontre des conditions de fonctionnement equivalentes, par exemple pour la commande de machines-outils et équipements similaires.

## Revendications

1. Distributeur hydraulique rotatif, plus particulièrement pour mécanisme de direction assistée, comportant, dans un carter (1), un premier organe tournant en forme de disque (10) solidaire en rotation d'un arbre d'entrée (11) et monté à rotation dans une cavité discoïdale (9) d'un second organe tournant (3-5) solidaire en rotation d'un arbre de sortie (13), les deux organes coopérant mutuellement pour sélectivement former des trajets de fluide entre une source de fluide de pression (41) et les compartiments respectifs ($V_1,V_2$) d'un moteur d'assistance (16) en fonction de la position angulaire relative de ces deux organes, le premier organe (10) délimitant, dans la cavité discoïdale (9) au moins deux chambres internes (27) et deux chambres externes (26) décalées angulairement susceptibles de communiquer sélectivement avec des lumières de distribution (32,33) communiquant respectivement avec les compartiments ($V_1,V_2$) et formées dans les parois axiales en regard (6,7) de la cavité au droit de portions de voile (31) du premier organe (10) séparant une chambre interne (27) d'une chambre externe adjacente (26), les chambres externes (26) communiquant en permanence avec un passage (390) d'amenée de fluide sous pression, et au moins un passage de retour de fluide (38) communiquant en permanence avec les chambres internes (27), caractérisé en ce que le premier organe est constitué d'un rotor en étoile (10) dont les bras radiaux (20) délimitent entre eux les chambres externes (26), chaque chambre interne (27) étant formée dans un bras radial respectif (20) et présentant un bord extérieur (29) à profil ayant une convexité dirigée vers l'axe du rotor en étoile (10), le profil des lumières de distribution (32,33) coïncidant sensiblement avec celui des portions de voile associées (31) des bras (20).

2. Distributeur hydraulique selon la revendication 1, caractérisé en ce que les bords latéraux des lumières de distribution (32,33) et les bords latéraux (25,28) des portions de voile (31) des bras (20) du rotor (10) sont sensiblement droits et radiaux.

3. Distributeur hydraulique selon la revendication 2, caractérisé en ce qu'au moins les bords latéraux (25,28) des portions de voile (31) des bras (20) du rotor (10) sont réalisés sous la forme de chanfreins à profil évolutif délimitant avec les bords adjacents coopérants des lumières de distribution (32, 33) un passage de fluide (250, 280) ayant pour chaque position angulaire relative des deux organes, une largeur sensiblement identique sur toute sa longueur radiale.

4. Distributeur hydraulique selon l'une des revendication 1 à 3, caractérisé en ce que le second organe (3-5) est constitué d'un assemblage axial d'au moins deux éléments annulaires (3,4) dont les faces en regard forment les parois axiales (6,7) de la cavité discoïdale (9), ces éléments annulaires étant assemblés par des organes de fixation (50) s'étendant axialement au travers des chambres externes (26) du rotor en étoile (10).

5. Distributeur hydraulique selon la revendication 4, caractérisé en ce que le second organe (3-5) comporte, entre les deux éléments annulaires (3,4) une pièce annulaire (5) délimitant périphériquement la cavité discoïdale (9).

6. Distributeur hydraulique selon la revendication4ou la revendication 5, caractérisé en ce que le second organe (3-5) est monté à rotation dans un alésage (2) du carter (1).

7. Distributeur hydraulique selon la revendication 6, caractérisé en ce que des circuits de distribution (35,37) communiquant avec les lumières de distribution (32,33) et le passage d'amenée de fluide de travail sous pression (390) débouchent à la périphérie du second organe (3-5) dans des gorges annulaires distantes axialement (34,36;39) formées dans l'alésage (2) du carter (1).

8. Distributeur hydraulique selon l'une des revendications précédentes, caractérisé en ce que les passages de retour sont constitués par des alésages axiaux (38) traversant le second organe (3-5).

**Claims**

1. A rotary hydraulic distributor, in particular for a servo steering mechanism, comprising, in a casing (1), a disc-shaped first rotaring member (10) non-rotatably connected to a dciving shaft (11) and rotatably mounted in a disc-shaped cavity (9) or a second rotaring member (3-5) non-rotatably connected to a driven shaft (13), the two members mutually ccoperating for seletiely forming fluid paths between a pressure fluid source (41) and the respective compartmentys ($V_1$,$V_2$) of a servo motor (16) in response to the relative angular position of the two members, the first member (10) delimiting in the disc-shaped cavity (9) at least two internal chahambers (27) and two exterernal chambers (26) circumferentially spaced and adapted to selectively communicate with distribution ports (32,33) respectively communicating with said compartments ($V_1$,$V_2$) and formed in the axial walls (6,7) opposite the cavity at the area of plain portions (31) of the first member (10) separating an internal chamber (27) from an adjacent external chamber (26), the external chambers (26) permanently communicating with a pressure fluid feeding passage (390), and at least one fluid refeeding passage (38) permanently communicating with the internal chambers (27), characterized in that the first member is comprised of a star-shaped rotor (10) having radial arms (20) delimiting between them the external chambers (26), each internal chamber (27) being formed in a respective radial arm (20) and having an external edce (29) of a profile of a convexity towards the axis of the star-shaped rotor (10), the profile of the distributor ports (32,33) substantially coinciding with that of the associated plain portions (31) of the arms (20).

2. Hydraulic distributor according to claim 1, characterized in that the lateral edges of the distributor ports (32,33) and the lateral edges (25,28) of the plain portions (31) of the arms (20) of the rotor (10) are substantially straight and radial.

3. Hydraulic distributor acccrding to claim 2, characterrized in that at least the lateral edges (25,28) of the plain portions (31) of the arms (20) or the rotor (10) are shaped as chamfers of a variable profite delimiting a fluid passage (250,280) with the adjacent edges cooperating with the distributor ports (32,33), the fluid passage having a substantially uniform width along its total radial length for each relative angular position of the two members.

4. Hydraulic distributor according to any of claims 1 to 3, caracterized in that the second member (3-5) is comprised of an axial assembly of at least two annular members (3,4), the adjacent faces-of which form the axial walls (6,7) of the disc-shaped cavity (9), the annular members being assembled by securing means (50) aXially extending through the external chambers (26) of the star-shaped rotor (10).

5. Hydraulic distributor according to claim 4, characterized in that the second member (3-5) comprises between the two annular members (3,4) an annular part (5) peripherally delimiting the disc-shaped cavity (9).

6. Hydraulic distributor according to claim 4 or 5, characterized in that the second member (3-5) is rotatably mounted in a bore (2) of the casing (1).

7. Hydraulic distributor according to claim 6, characterized in that distributor circuits (35,37) communicating with the distributor ports (32,33) and the pressure fluid feeding passage (390), open at the periphery of the second member (3-5) into axially spaced annular grooves (34,36;39) formed in the bore (2) of the casing (1).

8. Hydraulic distributor acccrding to any of the preceding claims, charaterized in that the refeeding passages are comprised of axial bores (38) traversing the second member (3,5).

**Patentansprüche**

1. Rotationshydraulischer Verteiler, insbesondere für eine Servolenkungseinrichtung, mit einem in einem Gehäuse (1) angeordneten ersten umlaufenden Bauteil in Form einer Scheibe (10), die mit einer treibenden Welle (11) drehfest verbunden ist und in einem scheibenförmigen Raum (9) eines mit einer getriebenen Welle (13) drehfest verbundenen zweiten umlaufenden Bauteiles (3-5) drehbar gelagert ist, wobei die beiden Bauteile zusammenwirken, um wahlweise Strömungsverbindungen zwischen einer Druckmittelquelle (41) und den entsprechenden Kammern ($V_1$,$V_2$) eines Servomotors (17) in Abhängigkeit von der Winkelstellung der beiden Bauteile zu bilden, wobei das erste Bauteil (10) in dem scheibenförmigen Raum (9) mindestens zwei innere Kammern (27) und mindestens zwei äußere Kammern (26) bildet, die einen Winkelabstand voneinander haben und wahlweise mit Verteilerschlitzen (32,33) verbindbar sind, die jeweils mit den Kammern ($V_1$,$V_2$) in Verbindung stehen und in den axialen Wänden (6,7) gegenüber dem besagten Raum an der Stelle von Vollabschnitten (31) des ersten Bauteiles (10) gebildet sind, um eine innere Kammer (27) von einer angrenzenden äußeren Kammer (26) zu trennen, wobei die äußeren Kammern (26) dauernd mit einem Druckmittel-Zuführungskanal (390) in Verbindung stehen und mindestens ein Strömungsmittelrückführkanal (38) dauernd mit den inneren Kammern (27) in Verbindung steht, dadurch gekennzeichnet, daß das erste Bauteil von einem sternförmigen Rotor (10) gebildet wird, dessen radiale Arme (20) zwischen sich die inneren Kammern (26) begrenzen, wobei jede innere Kammer (27) in einem entsprechenden radialen Arm (20) gebildet ist und einen äußeren Rand (29) mit einem Profil besitzt, das zur Achse des sternförmigen Rotors (10) konvex ausgebildet ist, wobei das Profil der Verteilerschlitze (32, 33) im wesentlichen mit dem der zugehörigen Vollabschnitte (31) der Arme (20) zusammenfällt.

2. Hydraulischer Verteiler nach Anspruch 1, dadurch gekennzeichnet, daß die seitlichen Ränder der Verteilerschlitze (32,33) und die seitlichen Ränder (25,28) der Vollabschnitte (31) der Arme (20) des Rotors (10) im wesentlichen geradlinig und radial verlaufen.

3. Hydraulischer Verteiler nach Anspruch 2, dadurch gekennzeichnet, daß mindestens die seitlichen Ränder (25,28) der Vollabschnitte (31) der Arme (20) des Rotors (10) die Form von Fasen mit sich änderndem Profil haben, die mit den zusammenwirkenden angrenzenden Rändern der Verteilerschlitze (32,33) einen Strömungsmittelkanal (250,280) bilden, der für jede relative Winkellage der beiden Bauteile im wesentlichen die gleiche Breite über seine gesamte radiale Länge hat.

4. Hydraulischer Verteiler nach einem der Ansprüche 1-3, dadurch gekennzeichnet, daß das zweite Bauteil (3-5) von einer axialen Anordnung mindestens zweier Ringkörper (3,4) gebildet wird, deren einander zugewandte Stirnseiten dieaxialen Wände (6,7) des scheibenförmigen Raums (9) bilden, wobei die Ringkörper mittels Befestigungselementen (50) zusammengesetzt sind, die sich axial durch die äußeren Kammern (26) des sternförmigen Rotors (10) erstrecken.

5. Hydraulischer Verteiler nach Anspruch 4, dadurch gekennzeichnet, daß das zweite Bauteil (3 5) zwischen den beiden Ringkörpern (3 4) ein ringförmiges Teil (5) aufweist, das umfangsmäßig den scheibenförmigen Raum (9) begrenzt.

6. Hydraulischer Verteiler nach Anspruch 4 oder 5, dadurch gekennzeichnet, daß das zweite Bauteil (3-5) in einer Bohrung (2) des Gehäuses (1) drehbar gelagert ist.

7. Hydraulischer Verteiler nach Anspruch 6, dadurch gekennzeichnet, daß Verteilerkreise (35,37), die mit den Verteilerschlitzen (32,33) und dem DruckmittelZuführungskanal (290) in Verbindung stehen, am Umfang des zweiten Bauteils (3-5) in axial beabstandeten Ringnuten (34,36;39) münden, die in der Bohrung (2) des Gehäuses (1) gebildet sind.

8. Hydraulischer Verteiler nach einem der vorhergehenden Ansprüche, dadurch gekennzeichnet, daß die Rückführkanäle von axialen Bohrungen (38) gebildet werden, die sich durch das zweite Bauteil (3-5) hindurcherstrecken.

FIG_1

FIG_2

FIG_5

FIG. 3

FIG. 4